# EUROPEAN PATENT SPECIFICATION

(11) **EP 1 902 766 B1**
(45) Date of publication and mention of the grant of the patent: **18.03.2009**
(21) Application number: 07014050.4
(22) Date of filing: 18.07.2007
(51) Int. Cl.: B01D 39/00, C04B 35/565, C04B 35/638, C04B 38/00

(54) **Method for manufacturing a honeycomb structured body**
Verfahren zur Herstellung eines wabenförmigen Körpers
Procédé de construction d'un corps en forme de nid d' abeilles.

(30) Priority: 14.09.2006 WO PCT/JP2006/318299
(43) Date of publication of application: 26.03.2008
(73) Proprietor: IBIDEN CO., LTD., Ogaki-shi Gifu 503-8604 (JP)
(72) Inventor: Naruse, Kazuya, 45320 Courtenay (FR); Saijo, Takamitsu, 2326 Neumann Janos u. 1 (HU); Matsui, Kazutomo, Ibigawacho Ibi-gun Giku 501-0695 (JP)
(74) Representative: HOFFMANN EITLE

(56) References cited:
- EP-A- 1 696 194
- EP-A- 1 803 695
- EP-A- 1 832 565
- JP-A- 10 167 854
- JP-A- 2002 020 173
- JP-A- 2002 097 076
- JP-A- 2002 226 271

## Description

### TECHNICAL FIELD

The present invention relates to a method for manufacturing a honeycomb structured body.

### BACKGROUND ART

Particulates such as soot and the like contained in exhaust gases discharged from internal combustion engines of vehicles such as buses and trucks, and construction machines and the like, have become a problem of recent, in which they cause harm to the environment and the human body.
To remedy this, there are currently being proposed various kinds of honeycomb filters using a honeycomb structured body made from porous ceramics as a filter for capturing particulates contained in exhaust gasses, and thus purifying the exhaust gases.
Also, as a honeycomb structured body, there has been proposed a honeycomb structured body comprising silicon carbide due to the excellent high temperature resistance.

Conventionally, upon manufacturing this kind of honeycomb structured body, first, a silicon carbide powder, a binder, a dispersant solution, and the like, are mixed to prepare a material composition. Then, this material composition is continuously extrusion molded, and the extruded molded body is cut into a predetermined length to manufacture a rectangular pillar-shaped honeycomb molded body.

Next, the honeycomb moldedbodymanufactured above is dried by using a microwave drying apparatus and/or a hot air drying apparatus, and the predetermined cells are sealed so that either one of the end portions of each of the cells is sealed. After the sealed state has been achieved, degreasing and firing treatments are carried out to manufacture a honeycomb fired body.

After this, a sealing material paste is applied to the side faces of the honeycomb fired body, and a number of honeycomb fired bodies are then bonded together. Then, an aggregated body of the honeycomb fired bodies with a number of honeycomb fired bodies bonded together by interposing a sealing material layer (adhesive layer) is manufactured. A cutting treatment is then carried out on the resulting aggregated body of the honeycomb fired bodies by using a cutting machine and the like, to manufacture a honeycomb block of a predetermined form, such as a round pillar, a cylindroid shape, and the like. Finally, a sealing material paste is applied to the periphery of the honeycomb block to form a sealing material layer (coat layer), thereby completing the manufacturing of a honeycomb structured body.

A number of different processes have been described for preparing honeycomb structured bodies similar to the present invention. JP 2002 226271A and JP 2002 020173A describe processes in which the residual carbon rate and oxygen concentration of the degreasing process are controlled respectively. In order to reduce the risk of explosions during these degreasing processes, EP 1 696 194 A2 and JP 2002 097076A describe methods in which the inflammable gases evolved during the process are removed. Furthermore, EP 1 832 565 A1 and EP 1 803 695 A1 describe jigs that are useful for firing and degreasing a silicon carbide honeycomb structured body respectively.

In the method for manufacturing a honeycomb structured body of the present invention, after having manufactured the honeycomb molded body by extrusion-molding, a degreasing treatment is carried out on the molded body.
As such degreasing treatments, a method for carrying out a degreasing in an airflow with an oxygen content in the range of 1 to 10%, and a method for carrying out degreasing in an air atmosphere are proposed (for example, refer to Patent Documents 1 and 2).
Patent Document 1: JP-A 1998-167854
Patent Document 2: JP-A 2002-097076

### DISCLOSURE OF THE INVENTION

### PROBLEMS TO BE SOLVED BY THE INVENTION

In this kind of degreasing treatment, a binder, a dispersant solution and the like, are decomposed and removed. However, in this degreasing treatment, if degreasing is allowed to progress completely, and organic components within the honeycomb molded body are completely decomposed and removed, a strength of the degreased honeycomb molded body (honeycomb degreased body) becomes low, resulting in the loss of the ability to retain its shape, and causing a generation of pin-holes, cracks and the like in the manufactured honeycomb fired body. Also, in the degreasing treatment, if the organic components within the honeycomb molded body are completely decomposed and removed, a thermal conductivity of the honeycomb degreased body becomes low, the generation of cracks may occur due to thermal shock occurring in the firing treatment following to the degreasing treatment.

### MEANS FOR SOLVING THE PROBLEMS

As a result of dedicated examination aimed at solving the above-mentioned problems, the inventors have found that by carrying out a degreasing treatment under predetermined conditions, it is possible to maintain the strength and thermal conductivity of the honeycomb degreased body with certainty, and have completed the present invention.

In other words, the method for manufacturing a honeycomb structured body of the present invention is a method for manufacturing a honeycomb structured body including the steps of: preparing a material composition containing at least a silicon carbide powder and a binder; manufacturing a pillar-shaped honeycomb molded body in which a number of cells are disposed in parallel with one another in a longitudinal direction with a cell wall therebetween by molding the material composition; manufacturing a honeycomb degreased body by carrying out a degreasing treatment on the honeycomb molded body; and manufacturing a honeycomb structured body comprising a honeycomb fired body by carrying out a firing treatment on the honeycomb degreased body, wherein the degreasing treatment is carried out at a degreasing temperature of 250 to 390°C and under O₂ concentration in the atmosphere of 5 to 13% by volume.

In the method for manufacturing a honeycomb structured body, a carbon content in the honeycomb degreased body is preferably in the range of 0.5 to 2.0% by weight. In addition, in the method for manufacturing a honeycomb structured body, a SiO₂ content in the honeycomb degreased body is preferably in the range of 1.9 to 3.4% by weight.

Also, in the method for manufacturing a honeycomb structured body, a weight ratio of SiO₂ and carbon contained in the honeycomb degreased body is preferably more than 1.0 and 5.0 or less.

Also, in the method for manufacturing a honeycomb structured body, a content of carbon source material in the material composition is preferably in the range of 8 to 18% by weight.
In addition, in the method for manufacturing the honeycomb structured body, the binder is preferably a compound which is decomposed at 250 to 390°C.

### EFFECTS OF THE INVENTION

In the method for manufacturing a honeycomb structured body of the present invention, since the degreasing is carried out under the above-mentioned conditions, it is possible to leave behind carbon within the honeycomb degreased body to some extent after degreasing, and therefore, it is possible for the honeycomb degreased body to maintain a predetermined shape. Also, the honeycomb degreased body of this kind maintains a high thermal conductivity due to the presence of the carbon, and a sintering of the silicon carbide progresses with certainty during the firing treatment, thereby making it possible to manufacture a honeycomb structured body having a low pressure loss and a high strength.

### BEST MODE FOR CARRYING OUT THE INVENTION

Hereinbelow, the method for manufacturing a honeycomb structured body of the present invention will be described in the order of the steps.
The method for manufacturing a honeycomb structured body of the present invention is a method for manufacturing a honeycomb structured body including the steps of: preparing a material composition containing at least a silicon carbide powder and a binder; manufacturing a pillar-shaped honeycomb molded body in which a number of cells are disposed in parallel with one another in a longitudinal direction with a cell wall therebetween by molding the material composition; manufacturing a honeycomb degreased body by carrying out a degreasing treatment on the honeycomb molded body; and manufacturing a honeycomb structured body comprising a honeycomb fired body by carrying out a firing treatment on the honeycomb degreased body, wherein the degreasing treatment is carried out at a degreasing temperature of 250 to 390°C and under O₂ concentration in the atmosphere of 5 to 13% by volume.
Here, in the present invention, the term 'pillar-shaped' is not limited to round or rectangular pillar shapes, and the shape of the bottom face can be any shape.

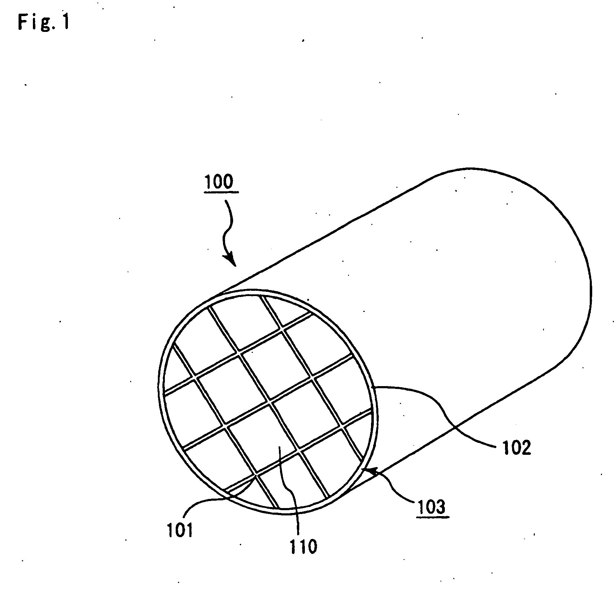

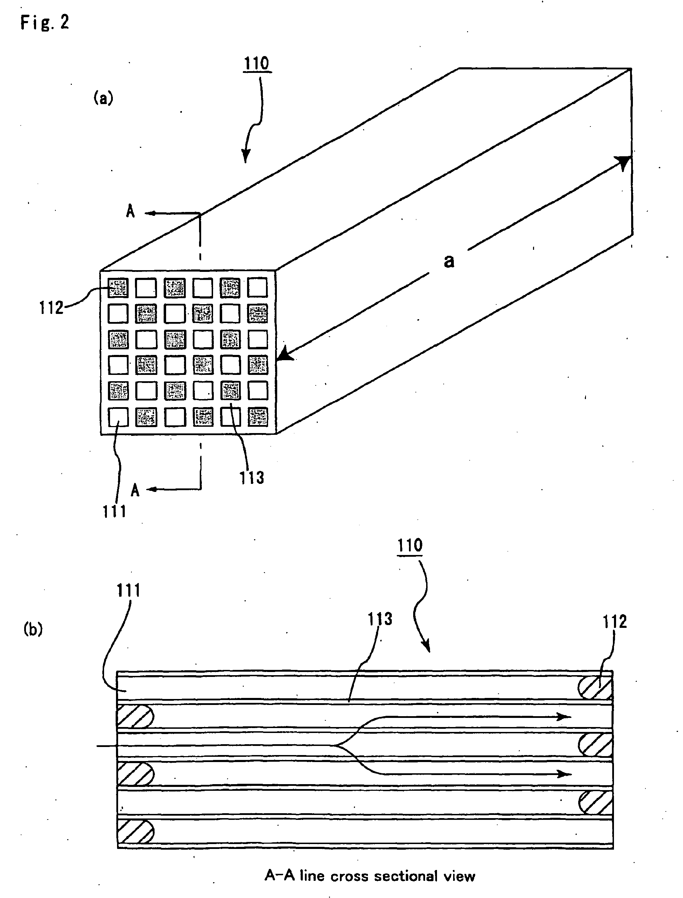

Here, the method for manufacturing a honeycomb structured body of the present invention will be described by taking a case of manufacturing a honeycomb structured body as an example where a honeycomb block 103 are formed by a plurality of honeycomb fired bodies 110 bonded together by interposing a sealing material layer (adhesive layer) 101, and then another sealing material layer (coat layer) 102 is formed on the periphery of this honeycomb block 103, as illustrated in Figs. 1 and 2. However, the honeycomb structured body manufactured by the manufacturing method of the present invention is not limited to the honeycomb structured body of this kind of configuration.

Fig. 1 is a perspective view that schematically illustrates one example of a honeycomb structured body. Fig. 2(a) is a perspective view that schematically illustrates a honeycomb fired body that forms the honeycomb structured body, and Fig. 2 (b) is a cross-sectional view taken along line A-A of Fig. 2 (a).

In a honeycomb structured body 100, a plurality of the honeycomb fired bodies 110 of the kind illustrated in Fig. 1 are bonded together by interposing the sealing material layer (adhesive layer) 101 to form the honeycomb block 103, and the sealing material layer (coat layer) 102 is further formed on the periphery of the honeycomb block 103.
And as illustrated in Fig. 2 (a) and 2 (b), in the honeycomb fired body 110, a number of cells 111 are disposed in parallel with one another in a longitudinal direction (the direction shown by an arrow a in Fig. 2(a)), and cell walls 113 individually separating the cells 111 are allowed to function as a filter.

In other words, the end portion of either the exhaust gas-inlet or the exhaust gas-outlet sides of the cells 111 formed in the honeycomb fired body 110 are sealed by a plug material 112, as illustrated in Fig. 2 (b) . Exhaust gases flowing into one of the cells 111 must pass through the cell walls 113 separating the cells 111 to flow out through another one of the cells 111. When the exhaust gases pass through the cell walls 113, particulates contained within the exhaust gases are captured by the cell walls 113, thereby purifying the exhaust gases.

In the method for manufacturing a honeycomb structured body of the present invention, a material composition containing at least a silicon carbide powder and a binder is prepared.
Although the silicon carbide powder is not particularly limited, the silicon carbide powder which tends not to cause the case where the size of the honeycomb structured body manufactured by the following firing treatment becomes smaller than that of the honeycomb degreased body is desirable. For example, a silicon carbide powder combining 100 parts by weight of an average particle diameter (D50) in the range of 0.3 to 50µm, and 5 to 65 parts by weight of a silicon carbide powder of an average particle diameter (D50) in the range of 0.1 to 1.0µm is desirable.
Although it is necessary to adjust the firing temperature in order to adjust the pore diameter or the like of the honeycomb structured body, it is possible to carry out the adjustment of the pore diameter by adjusting the particle diameter of the silicon carbide powder.
Also, in the present description, the term 'average particle diameter (D50)' refers to a median diameter based on volume.
Here, a specific measuring method of a particle diameter is briefly described. A particle size (particle diameter) is typically represented as an abundance ratio distribution per particle diameter by integrating the measuring results. This abundance ratio distribution per particle diameter is referred to as a particle size distribution. As a measuring method of the particle size distribution, for example, a laser diffraction scattering method on a principle of a measurement based on a volume, or the like, can be employed. Here, in such a method, the particle size distribution is measured on the assumption that the particles have a spherical shape. Then, the particle size distribution is converted into a cumulative distribution, and therefore the above-mentioned median diameter (the diameter where an amount of particles included in a group having larger particle diameters and an amount of particles included in a group having smaller particle diameters becomes equal when a group of particles is divided into the two groups by a certain particle diameter) is calculated.

Also, the purity of the silicon carbide powder is preferably in the range of 94 to 99.5% by weight.
This is because, if the purity of the silicon carbide powder is within the range, the sintering progresses excellently upon manufacturing a silicon carbide sintered body. In contrast to this, if the purity is less than 94% by weight, there are cases where the progress of the sintering of the silicon carbide is inhibited by impurities, and the purity exceeding 99.5% by weight will result in no further improvements in the sintering properties and no substantial change of the properties such as the strength and the durability or the like of the manufactured honeycomb structured body despite the higher cost needed in procuring such a high purity silicon carbide powder.

Here, in the present description, the term 'purity of a silicon carbide powder' refers to the % by weight of silicon carbide within a silicon carbide powder.
This is because, normally, although termed 'silicon carbide powder', impurities (unavoidable impurity) are unavoidably mixed within the powder in manufacturing or storing the silicon carbide powder.

Also, the silicon carbide powder may be an α-type silicon carbide powder, a β-type silicon carbide powder, or a combination of both the α-type and the β-type silicon carbide powder, and the α-type silicon carbide powder is most preferable.
This is because the α-type silicon carbide powder is low cost in comparison with the β-type silicon carbide powder, and also in cases where the α-type silicon carbide powder is used, it is easier to control a pore diameter and it is suitable for manufacturing a silicon carbide sintered body having uniform pore diameters.

The binder is preferably a compound that decomposes at a temperature of 250 to 390°C.
This is because such a compound will be decomposed with certainty in the degreasing treatment. Specific examples of the binder include cellulose class substances such as methyl cellulose, carboxymethyl cellulose, hydroxyethyl cellulose (decomposition temperature: 350 to 370°C); polyethylene glycol (decomposition temperature: 200 to 250°C); and the like. Out of the above, the cellulose class substances are most preferable. This is because since the cellulose class substances have a high water-holding capacity, there are rare cases where water is wrung out of the material composition upon molding.
Preferably, the compounding amount of the binder is normally in the range of 1 to 10 parts by weight per 100 parts by weight of a silicon carbide powder.

It is also acceptable that the material composition contains a plasticizer, a lubricant and the like.
The plasticizer is not particularly limited, and an example includes glycerin and the like.
Also, the lubricant is not particularly limited, and examples include polyoxyalkylene series compounds such as polyoxyethylene alkyl ether, polyoxypropylene alkyl ether and the like. Specific examples of the lubricant include polyoxyethylene monobutyl ether, polyoxypropylene monobutyl ether and the like.
It is desirable to use plasticizers and lubricants from the above-mentioned substances which are decomposed at temperatures of 250 to 390°C. This is because it is possible for the plasticizers and lubricants to become the following carbon source material.

As a specific example of a method for preparing the material composition, it is possible to use a method as follows: preparing a powder mixture by dry-mixing two kinds of silicon carbide powder of different average particle diameters (D50), and a binder; separately preparing a liquid mixture by mixing a plasticizer, a lubricant, water and the like; and then mixing the powder mixture and liquid mixture by using a wet mixer.

It is also acceptable to add a pore-forming agent to the above-mentioned material composition according to need.
Examples of the pore-forming agent include balloons that are fine hollow spheres mainly comprising oxide-based ceramics, spherical acrylic particles, graphite and the like.

Also, the temperature of the material composition prepared here is desirably 28°C or less. This is because the binder may tend to gel at too high a temperature. In addition, the water content of the material composition is desirably in the range of 8 to 20% by weight.

The content of the carbon source material within the material composition is desirably in the range of 8 to 18% by weight. This is because at the content of carbon source material of less than 8% by weight, the strength of the honeycomb degreased body manufactured through the following degreasing treatment may be insufficient, thereby making it impossible for the honeycomb degreased body to maintain a predetermined honeycomb degreased body shape. This is also because there are cases in which pin-holes, cracks and the like are generated in the honeycomb fired body manufactured in the following firing treatment, and the presence of such pin-holes and cracks causes a reduction in the strength and a variation in the pore diameter. In addition, there are cases in which the pore diameter cannot be enlarged as a result of the content of carbon source material of less than 8% by weight.
Alternately, at the content of carbon source material of more than 18% by weight, there are cases in which the content of carbon remaining in the honeycomb degreased body after the completion of the degreasing treatment (hereinafter, also termed 'the residual carbon content') becomes too much, thereby inhibiting the sintering of the silicon carbide and generating the variation in pore diameter as a result.
Here, the term 'carbon source material' referstocompounds within the material composition which are thermally decomposed during degreasing and thereby able to be left behind as carbon, and specifically refers to a binder, a plasticizer, a lubricant and the like.

Next, this material composition is extrusion molded by an extrusion-molding method and the like. Then, by cutting the molded body manufactured by the extrusion-molding by using a cutting machine, a honeycomb molded body having a shape same as that of the pillar-shaped honeycomb fired body 110 illustrated in Fig. 2(a), and not having its end portions sealed, is manufactured.

Next, according to need, a predetermined amount of plug material paste, which will serve as the plug, is filled to one of the end portions of each of the cells, thereby sealing the cells.
Specifically, in the case of manufacturing a honeycomb structured body functioning as a ceramic filter, either one of the end portions of the each of the cells is sealed.
Also, according to need, a drying treatment may be carried out before sealing the honeycomb molded body. In this case, the drying treatment may be carried out by using a microwave drying apparatus, a hot air drying apparatus, a reduced pressure drying apparatus, a dielectric drying machine, a freeze drying apparatus and the like.

Although the plug material paste is not particularly limited, it is preferably a paste having a porosity of a plug being in the range of 30 to 75% formed through the following steps, and for example, it is possible to use the same composition as the material composition.

Filling in of the plug material paste may be carried out according to need, and in the case of having filled in the plug material paste, for example, the honeycomb structured body manufactured by the following steps can be suitably used as a ceramic filter, and in the case of not having filled in the plug material paste, for example, the honeycomb structured body manufactured by the following steps can be suitably used as a catalyst supporting carrier.

Next, the honeycomb degreased body is manufactured by carrying out a degreasing treatment on the honeycomb molded body. The degreasing treatment is carried out under the following conditions: degreasing temperature 250 to 390°C, and O₂ concentration in the atmosphere of 5 to 13% by volume.
Less than 250°C of the degreasing temperature causes an excessive residual carbon content in the honeycomb degreased body, and inhibits the progress of sintering of the silicon carbide in the following firing treatment, causing occurrences of the variation of the pore diameter and the reduction of the strength in the manufactured honeycomb fired body.
Alternately, more than 390°C of the degreasing temperature will cause too little residual carbon content in the honeycomb degreased body and sometimes result in failure to maintain a predetermined shape. In addition, since too little residual carbon content causes a reduction in the thermal conductivity of the honeycomb degreased body, a temperature locally rises in the honeycomb degreased body upon carrying out the firing treatment thereto, giving rise to cracks according to thermal shock. In a case in which such cracks have occurred, the strength of the manufactured honeycomb fired body becomes insufficient.

The degreasing temperature is more desirably in the range of 250 to 350°C. This is because, the degreasing temperature in the above-mentioned temperature range makes it possible to manufacture a honeycomb structured body having an even higher degree of strength.

O₂ concentration in the atmosphere of less than 5% by volume makes it difficult to decompose and remove carbon source materials, causes too much residual carbon content in the honeycomb degreased body, and inhibits the progress of sintering of the silicon carbide in the following firing treatment, resulting in failure to enlarge the pore diameter to design values (the pore diameter expected from an average particle diameter of the silicon carbide powder and a firing condition), non-formation of the neck (the joint site of the silicon carbide particles), and reduction in the strength, in the honeycomb fired body that has passed through the firing treatment.
Alternately, O₂ concentration in the atmosphere of more than 13% by volume diminishes the residual carbon content in the honeycomb degreased body, causes a reduction in the strength of the honeycomb degreased body, and makes its shape retention and handling difficult.

In the honeycomb degreased body manufactured by this kind of degreasing treatment, the carbon content within the honeycomb degreased body (residual carbon content) is desirably in the range of 0.5 to 2.0% by weight.
This is because, with the residual carbon content of less than 0.5% by weight there are cases in which it is impossible for the honeycomb degreased body to retain a desired shape, and cases in which the strength in the ultimately manufactured honeycomb fired body is insufficient for use. Alternately, a residual carbon content of more than 2.0% by weight inhibits the progress of the sintering of the silicon carbide and causes occurrences of the variation in the pore diameter and a larger pressure loss, in the honeycomb fired body.

In order to adjust the residual carbon content within the honeycomb degreased body, the composition of the material composition (the content of carbon source material), as well as degreasing conditions (degreasing temperature, O₂ concentration in the atmosphere), is adjusted, as has been set forth hereinabove.

The SiO₂ content is desirably in the range of 1.9 to 3.4% by weight within the honeycomb degreased body.
As has already been described hereinabove, one characteristic of the method for manufacturing a honeycomb structured body of the present invention is that it includes a step of manufacturing a honeycomb degreased body containing carbon by carrying out a decreasing treatment under predetermined conditions. Then,manufacturing thiskind ofcarbon-containing honeycomb degreased body makes the present invention useful in the point that the above-mentioned effects can be enjoyed. However, there is a concern that in cases of carrying out a firing treatment on the carbon-containing honeycomb degreased body to manufacture the honeycomb fired body, the following inconveniences may occur.

Specifically, carbon contained within the honeycomb degreased body exhibits excellent effects during the firing treatment; while there is a concern that the inconvenience may occur that the sintering of the silicon carbide may be inhibited because the carbon occupies the positions between silicon carbide powder particles during the firing treatment.
Because of this, the carbon contained within the honeycomb degreased body is desirably made to fill its role of improving the thermal conductivity of the honeycomb degreased body during the firing treatment and then made to be ultimately removed from the honeycomb degreased body.

Therefore, in the method for manufacturing a honeycomb structured body of the present invention, the honeycomb degreased body desirably has the SiO₂ content in the range of 1.9 to 3.4% by weight in order that the carbon contained within the honeycomb degreased body may be removed during the firing treatment.
In a case where the honeycomb degreased body contains SiO₂, a reaction represented by the following reaction formula (1) progresses between the SiO₂ and the carbon to result in the removal of the carbon from within the honeycomb degreased body.
[Formula 1]

SiO₂+C⇆SiO↑+CO↑ (1)

Here, the higher the temperature becomes, the more rightwardly (thesidegeneratingCOgas) thereactionrepresented by the reaction formula (1) progresses.
Therefore, early in the firing treatment (rise period of an atmospheric temperature), there is residual carbon present within the honeycomb degreased body, and in comparison with the case where there is no carbon present within the honeycomb degreased body, the honeycomb degreased body exhibits an excellent thermal conductivity in the honeycomb degreased body due to the presence of the carbon. These excellent thermal conductivities prevent a local temperature rise on portions of the honeycomb degreased body, and instead, promote a uniform temperature rise, thereby making it possible to prevent the generation of cracks due to thermal shock.
Alternately, when the temperature of the honeycomb degreased body rises to a predetermined temperature, as the reaction represented by the reaction formula (1) progress, the carbon contained within the honeycomb degreased body is converted to CO gas and removed from within the honeycomb degreased body, enabling the sintering of the silicon carbide to progress with certainty.

If the SiO₂ content is less than 1.9% by weight, the SiO₂ content is too little and makes it impossible to remove the carbon contained within the honeycomb degreased body, with the result that it becomes difficult for the sintering of the silicon carbide to progress uniformly, and consequently, the variation in the pore diameter of the honeycomb fired body may be caused, and a large pressure loss of the manufactured honeycomb structured body may be caused. Alternately, if the SiO₂ content is more than 3.4% by weight, the sintering of the silicon carbide progresses excessively and causes an excessively large pore diameter, resulting in the reduction of the strength of the honeycomb fired body in some cases.

Here, as methods for adjusting the SiO₂ content within the honeycomb degreased body, it is possible to use methods such as separately adding SiO₂ powder to the material composition, or using a silicon carbide powder that contains a predetermined SiO₂ content as an impurity.
Also, it is acceptable to use a method for using a silicon carbide powder that has had its SiO₂ content adjusted by carrying out a purification treatment on a silicon carbide powder containing a large content of SiO₂ impurity. Here, in the purification treatment, SiO₂ is removed by purifying the silicon carbide powder with water solution such as H₂SO₄ or NaOH.
Also, in the manufacture of the silicon carbide powder, normally, an ingot of a silicon carbide is formed by firing petroleum coke and silica stone in an electric furnace, and a silicon carbide powder having a predetermined particle diameter can be manufactured by pulverizing this ingot. Here, it is possible to adjust the SiO₂ content within the silicon carbide powder by adjusting the length of time of the pulverization. Specifically, the SiO₂ content can be increased by increasing the pulverizing period of time.

Moreover, the weight ratio of the SiO₂ and carbon within the honeycomb degreased body is over 1.0 and 5.0 or less.
The weight ratio of the SiO₂ and carbon of 1.0 or less will sometimes cause the pressure loss on the manufactured honeycomb structured body and the variation in the pore diameter. Alternately, the weight ratio of the SiO₂ and carbon of more than 5.0 will sometimes cause an insufficient strength in the manufactured honeycomb fired body.

Next, by carrying out the firing treatment under predetermined conditions (at 1400 to 2300°C, for example) on the degreased honeycomb molded body, it is possible to manufacture a pillar-shaped honeycomb fired body of a number of cells disposed inparallel with one another in the longitudinal direction with cell walls therebetween, wherein either one of the end portions of each of the cells are sealed.

Next, the sealing material paste, which will serve as the sealing material layer (adhesive layer), is added to the side face of the honeycomb fired body. After this, the step that another honeycomb fired body is piled up on the sealing material paste layer is carried out repeatedly, thereby manufacturing an aggregated body of honeycomb fired bodies of predetermined size.

Examples of the sealing material paste include a paste comprising inorganic fibers and/or inorganic particles, in addition to an inorganic binder and an organic binder, and the like.
Examples of the inorganic binder include silica sol, alumina sol and the like. These may be used alone, or in a combination of two or more. Of the inorganic binders, silica sol is most preferable for use.

Examples of the organic binder include polyvinyl alcohol, methyl cellulose, ethyl cellulose, carboxymethyl cellulose and the like. These may be used alone, or in a combination of two or more. Of the organic binders, carboxymethyl cellulose is most preferable for use.

Examples of the inorganic fiber include ceramic fibers such as silica-alumina, mullite, alumina, silica and the like. These may be used alone, or in a combination of two or more. Of the above-mentioned inorganic fibers, an alumina fiber is most preferable for use.

Examples of the inorganic particles include carbide, nitride and the like. Specific examples include an inorganic powder and the like comprising silicon carbide, silicon nitride, boron nitride. These may be used alone, or in a combination of two or more. Of the above-mentioned inorganic particles, silicon carbide, which is superior in thermal conductivity, is most preferable for use.

Furthermore, according to need, a pore-forming agent such as balloons which are micro hollow spheres comprising oxide-based ceramics, spherical acrylic particles, graphite and the like, may be added to the sealing material paste.
The balloons are not particularly limited, and examples include alumina balloons, glass micro balloons, shirasu balloons, fly ash balloons (FA balloons), mullite balloons and the like, for example. Of the above-mentioned balloons, alumina balloons are the most preferable for use.

Next, this aggregated body of honeycomb fired bodies is heated so that the sealing material paste is dried and solidified to form a sealing material layer (adhesive layer).
Next, by using a cutting apparatus such as a diamond cutter, and the like, a cutting is carried out on the aggregated body of honeycomb fired bodies, where a plurality of honeycomb fired bodies are bonded together by interposing the sealing material layer (adhesive layer), thereby manufacturing a cylindrical honeycomb block.

Afterward, a sealing material layer (coat layer) is formed on the periphery of the honeycomb block by using the sealing material paste, thereby manufacturing a honeycomb structured body having the sealing material layer (coat layer) disposed on the periphery of the cylindrical honeycomb block where a plurality of honeycomb fired bodies are bonded together by interposing the sealing material layer (adhesive layer).
Here, the shape of the honeycomb structured body manufactured by the method for manufacturing a honeycomb structured body of the present invention is not limited to a cylindrical shape, or may be shapes such as a rectangular pillar shape, a cylindroid shape, or any other pillar shapes.

Afterward, according to need, a catalyst is supported to the honeycomb structured body. The supporting of the catalyst may be carried out on the honeycomb fired body before manufacturing the aggregate body.
In the case of supporting the catalyst, it is preferable to form an alumina film having a high specific surface area on the surface of the honeycomb structured body, and applying a co-catalyst and the catalyst such as platinum or the like to the surface of this alumina film.

Examples of methods for forming the alumina film on the surface of the honeycomb structured body include a method for impregnating the honeycomb structured body with a solution of a metal compound containing aluminium such as Al(NO₃)₃ or the like and then heating, a method for impregnating the honeycomb structured body with a solution containing an alumina powder and then heating, and the like.
Examples of a method for applying the co-catalyst to the alumina film include a method for impregnating the honeycomb structured body with a solution of a metal compound containing rare earth elements such as Ce (NO₃)₃ and then heating, and the like.
Example of a method for applying the catalyst to the alumina film include a method for impregnating the honeycomb structured body with a dinitrodiammine platinum nitric acid solution ([Pt (NH₃)₂(NO₂)₂]HNO₃, platinum content: 4.53% by weight) and the like, and then heating, and the like.
It is also acceptable to carry out an application of the catalyst by a method for first applying a catalyst to alumina particles in advance, then impregnating the honeycomb structured body with a solution containing an alumina powder where a catalyst is supported, and then heating.

The method for manufacturing a honeycomb structured body described up to this point has been the method for manufacturing a honeycomb structured body as illustrated in Figs. 1 and 2(a) having a structure of a plurality of honeycomb fired bodies bonded together by interposing the sealing material layer (adhesive layer) (also termed 'aggregated honeycomb structured body'), the honeycomb structured body manufactured according to the manufacturing method of the present invention may be a honeycomb structured body formed by a cylindrical ceramic block comprising a single honeycomb fired body (also termed 'integral honeycomb structured body').

In the case of manufacturing the integral honeycomb structured body, first, except that the size of the honeycomb molded body formed by the extrusion-molding is larger in comparison with the case of manufacturing an aggregated honeycomb structured body, the honeycomb molded body is manufactured by using the method same as that of the case of manufacturing the aggregated honeycomb structured body.

Next, according to need, the drying and/or the filling of the plug material paste into the cells are/is carried out in the same manner as in the manufacturing of the aggregated honeycomb structured body.
After that, the degreasing treatment is carried out on the honeycomb molded body under the same conditions as in the manufacturing of the aggregated honeycomb structured body, thereby manufacturing the honeycomb degreased body.
Furthermore, a honeycomb block formed by the honeycomb fired body is manufactured by carrying out the firing treatment on the honeycomb degreased body. Then, according to need, the sealing material layer (coat layer) is formed, thereby finishing manufacturing of the integral honeycomb structured body. It is also acceptable to support the catalyst on the integral honeycomb structured body as well, with the method described above.

With the method for manufacturing a honeycomb structured body of the present invention, it is possible to manufacture a honeycomb structured body having the high strength with the little variation in the pore diameter.
Also, up to this point, the description of the method for manufacturing a honeycomb structured body of the present invention has been set forth by using an example of a honeycomb structured body that is able to be used optimally as a ceramic filter. It is also possible to manufacture a honeycomb structured body without filling the plug material paste into the cells by using the method for manufacturing a honeycomb structured body of the present invention, and it is also possible to use such an unplugged honeycomb structured body optimally as the catalyst supporting carrier.

### EXAMPLES

The present invention is described more specifically by showing Examples below. However, the present invention is not limited to these Examples.

### (Example 1)

First, 250 kg of an α-type silicon carbide powder (SiO₂ content in powder: 1% by weight) having an average particle diameter of 10µm, 100 kg of an α-type silicon carbide powder (SiO₂ content in powder: 4 % by weight) having an average particle diameter of 0.5µm, and 20 kg of an organic binder (methyl cellulose / decomposition temperature: 350°C) were mixed together to prepare a powder mixture.
In all Examples and Comparative Examples including the present Example, average particle diameters were measured by a laser diffraction scattering method.
Next, 12 kg of lubricant (UNILUB, manufactured by NOF Corp. /decomposition temperature: 230°C), 5 kg of a plasticizer (glycerin / decomposition temperature : 290°C), and 65 kg of water were mixed in a separate container to prepare a liquid mixture. Next, by using a wet mixing machine, these powder and liquid mixtures were mixed together to prepare the material composition.

Next, by using conveying equipment, the material composition was conveyed to an extrusion-molding machine, and was then charged into a material charging port.
Then, a molded body having a shape same as the shape shown in Fig. 2 (a), except that the end portions of the cells are not sealed, was manufactured by the extrusion-molding.

Next, after drying the honeycomb molded body by using a microwave and hot-air combination drying apparatus, and next, a plug material paste having a composition same as that of the material composition was filled into predetermined cells.
Furthermore, after using the drying apparatus to carry out another drying treatment, degreasing was carried out under the conditions: at a degreasing temperature of 350°C; an O₂ concentration in the atmosphere of 9%; degreasing period of time for 1.1 hours; to the honeycomb molded body filled with the sealing material paste, thereby manufacturing a honeycomb degreased body.
The honeycomb degreased body manufactured in the present step has a carbon content of 0.6% by weight, a SiO₂ content of 2.5% by weight, and a SiO₂ and carbon weight ratio of 4.17, in the honeycomb degreased body.

Moreover, the carbon content within the honeycomb degreased body manufactured in the present step was measured by the combustion capacity method (refer to JIS R 6124).
Specifically, after measuring the total weight of the honeycomb degreased body, a 1 g portion of the honeycomb degreased body was excised as a measurement sample. Next, the free carbon within this sample was burned into CO₂ in the midst of oxygen airflow, captured along with oxygen in a burette, and the total gas volume was measured. Next, after absorptive removal of the CO₂, the volume of the residual gas was measured, and the free carbon was quantitatively estimated from the volume reduction amount. Afterward, the carbon content within the honeycomb degreased body was calculated from this quantitative value.
In addition, the SiO₂ content within the honeycomb degreased was measured by the neutralization titration method (refer to JIS R 6124).
Specifically, after measuring the total weight of the honeycomb degreased body, a 1 g portion of the honeycomb degreased body was excised as a measurement sample. Hydrofluoric acid (containingpotassiumfluoride) andhydrochloricacidwereadded to this sample and then heated, and the free SiO₂ was allowed to precipitate as potassium silicofluoride. This potassium silicofluoride was then dissolved with heated water and titrated with a 0.1 mol / 1 (litter) sodium hydroxide solution to quantitatively estimate the SiO₂. Afterward, the carbon content carbon within the honeycomb degreased body was calculated from this quantitative value.

Next, by carrying out a firing at a temperature of 2200°C in a normal-pressure argon atmosphere for 3 hours, a honeycomb fired body comprising a silicon carbide sintered body having a porosity of 40%, a size of 34.3 mm × 34.3 mm × 150 mm, with a cell count (cell concentration) of 46.5 pcs/cm², and a cell wall thickness of 0.25 mm, was manufactured.

Next, a cylindrical honeycomb block having a 1 mm thick sealing material layer (adhesive layer) was manufactured by bonding a number of honeycomb fired bodies together by using a heat resistant sealing material paste containing 30% by weight of an alumina fiber having an average fiber length of 20µm, 21% by weight of silicon carbide particles having an average particle diameter of 0.6µm, 15% by weight of silica sol, 5.6% by weight of carboxymethyl cellulose, and 28.4% by weight of water, then drying at a temperature of 120°C, and next cutting by using a diamond cutter.

Next, a sealing material paste was prepared by mixing and kneading together 23.3% by weight of a silica alumina-fiber (average fiber length of 100 µm, average fiber diameter of 10 µm) as an inorganic fiber, 30.2% by weight of a silicon carbide powder having an average particle diameter of 0.3 µm as inorganic particles, 7% by weight of silica sol (SiO₂ content within the sol: 30% by weight) as an inorganic binder, 0.5% by weight of carboxymethyl cellulose as an organic binder and 39% by weight of water.

Next, by using the sealing material paste, a sealing material paste layer having a thickness of 0.2 mm was formed on the periphery of the honeycomb block. This sealing material paste was then dried at a temperature of 120°C to manufacture a cylindrical honeycomb structured body having 143. 8 mm diameter × 150 mm length where the sealing material layer (coat layer) was formed on the periphery thereof.

(Examples 2 to 8, Comparative Examples 1 to 4)
The honeycomb structured body was manufactured in the same manner as in Example 1, aside from the use of the material composition having a composition indicated in Table 1, and the change of the degreasing temperature and the O₂ concentration in the atmosphere to the conditions shown in Table 2,to carry out the degreasing treatment.

**[Table 1]**

| | Material composition compounding amount (kg) | | | | | | | | Carbon source content within material composition |
|---|---|---|---|---|---|---|---|---|---|
| | α-Type silicon carbide powder | | | | Carbon source material | | | Water | |
| | Average particle diameter / 10 µm | | Average particle diameter / 0.5 µm | | Binder | Lubricant | Plasticizer | | |
| | Total powder amount | SiO₂ content within powder | Total powder amount | SiO₂ content within powder | Methyl cellulose | UNILUB | Glycerin | | (% by weight) |
| Example 1 | 250 | 1 | 100 | 4 | 20 | 12 | 5 | 65 | 8 |
| * Example 2 | 250 | 1 | 100 | 4 | 20 | 12 | 5 | 65 | 8 |
| Example 3 | 250 | 1 | 100 | 4 | 20 | 12 | 5 | 65 | 8 |
| Example 4 | 250 | 1 | 100 | 4 | 20 | 12 | 5 | 65 | 8 |
| Example 5 | 250 | 1 | 100 | 4 | 20 | 12 | 5 | 65 | 8 |
| Example 6 | 250 | 1 | 100 | 4 | 20 | 12 | 5 | 65 | 8 |
| Example 7 | 250 | 1 | 100 | 4 | 20 | 12 | 5 | 65 | 8 |
| Example 8 | 250 | 1 | 100 | 4 | 20 | 12 | 5 | 65 | 8 |
| Comparative Example 1 | 250 | 1 | 100 | 4 | 20 | 12 | 5 | 65 | 8 |
| Comparative. Example 2 | 250 | 1 | 100 | 4 | 20 | 12 | 5 | 65 | 8 |
| Comparative Example 3 | 250 | 1 | 100 | 4 | 20 | 12 | 5 | 65 | 8 |
| Comparative Example 4 | 250 | 1 | 100 | 4 | 20 | 12 | 5 | 65 | 8 |

| | | | | | | | | | |
|---|---|---|---|---|---|---|---|---|---|
| (*) control example, outside the scope of claim 1. | | | | | | | | | |

**[Table 2]**

| | Degreasing condition | | | Carbon content within degreased body | SiO₂ content within degreased body | Weight ratio of SiO₂ and carbon within degreased body |
|---|---|---|---|---|---|---|
| | Temp. | O₂ concentration | Time | | | |
| | °C | (% by volume) | (hr) | (% by weight) | (% by weight) | (SiO₂/C) |
| Example 1 | 350 | 9 | 1.1 | 0.6 | 2.5 | 4.17 |
| * Example 2 | 250 | 9 | 1.1 | 2.3 | 2.3 | 1.00 |
| Example 3 | 300 | 9 | 1.1 | 1.1 | 2.2 | 2.00 |
| Example 4 | 390 | 9 | 1.1 | 0.5 | 2.5 | 5.00 |
| Example 5 | 350 | 5 | 1.1 | 1.9 | 2.0 | 1.05 |
| Example 6 | 350 | 7 | 1.1 | 1.1 | 2.3 | 2.09 |
| Example 7 | 350 | 11 | 1.1 | 0.7 | 2.7 | 3.86 |
| Example 8 | 350 | 13 | 1.1 | 0.8 | 3.4 | 4.25 |
| Comparative Example 1 | 230 | 9 | 1.1 | 2.2 | 1.7 | 0.77 |
| Comparative Example 2 | 420 | 9 | 1.1 | 0.4 | 3.5 | 8.75 |
| Comparative Example 3 | 350 | 4 | 1.1 | 3.0 | 1.0 | 0.33 |
| Comparative Example 4 | 350 | 14 | 1.1 | 0.4 | 4.0 | 10.0 |

| | | | | | | |
|---|---|---|---|---|---|---|
| * control example, outside the scope of claim 1. | | | | | | |

### (Examples 9 to 26)

The honeycomb structured body was manufactured in the same manner as in Example 1, aside from the change of the material blending quantity and degreasing conditions so as to obtain the values shown in Tables 3 and 4 with respect to the content of carbon source material within the material composition, the carbon content and the SiO₂ content within the honeycomb degreased body.

**[Table 3]**

| | Material composition compounding amount (kg) | | | | | | | | Carbon source content within material composition |
|---|---|---|---|---|---|---|---|---|---|
| | α-Type silicon carbide powder | | | | Carbon source material | | | Water | |
| | Average particle diameter / 10 µm | | Average particle diameter / 0.5 µm | | Binder | Lubricant | Plasticizer | | |
| | Total powder amount | SiO₂ content within powder | Total powder amount | SiO₂ content within powder | Methyl cellulose | UNILUB | Glycerin | | (% by weight) |
| Example 1 | 250 | 1 | 100 | 4 | 20 | 12 | 5 | 65 | 8 |
| * Example 9 | 250 | 1 | 100 | 4 | 15 | 12 | 5 | 65 | 7 |
| Example 10 | 250 | 1 | 100 | 4 | 30 | 12 | 5 | 65 | 10 |
| Example 11 | 250 | 1 | 100 | 4 | 55 | 12 | 5 | 65 | 15 |
| Example 12 | 250 | 1 | 100 | 4 | 75 | 12 | 5 | 65 | 18 |
| * Example 13 | 250 | 1 | 100 | 4 | 25 | 12 | 5 | 65 | 9 |
| * Example 14 | 250 | 1 | 100 | 4 | 40 | 12 | 5 | 65 | 12 |
| * Example 15 | 250 | 1 | 100 | 4 | 10 | 12 | 5 | 65 | 6 |
| Example 16 | 250 | 1 | 100 | 4 | 30 | 12 | 5 | 65 | 10 |
| Example 17 | 250 | 1 | 100 | 4 | 45 | 12 | 5 | 65 | 13 |
| Example 18 | 250 | 1 | 100 | 4 | 75 | 12 | 5 | 65 | 18 |
| Example 19 | 250 | 1 | 100 | 4 | 40 | 12 | 5 | 65 | 12 |
| Example 20 | 250 | 1 | 100 | 4 | 55 | 12 | 5 | 65 | 15 |
| Example 21 | 250 | 1 | 100 | 4 | 75 | 12 | 5 | 65 | 18 |
| Example 22 | 250 | 1 | 100 | 4 | 40 | 12 | 5 | 65 | 12 |
| Example 23 | 250 | 1 | 100 | 4 | 75 | 12 | 5 | 65 | 18 |
| Example 24 | 250 | 1 | 100 | 4 | 100 | 12 | 5 | 65 | 20 |
| * Example 25 | 250 | 1 | 100 | 4 | 75 | 12 | 5 | 65 | 18 |
| Example 26 | 250 | 1 | 100 | 4 | 100 | 12 | 5 | 65 | 22 |

| | | | | | | | | | |
|---|---|---|---|---|---|---|---|---|---|
| (*) control examples, outside the scope of claim 1. | | | | | | | | | |

**[Table 4]**

| | Degreasing condition | | | Carbon content within degreased body | SiO₂ content within degreased body | Weight ratio of SiO₂ and carbon within degreased body |
|---|---|---|---|---|---|---|
| | Temp. | O₂ concentration | Time | | | |
| | °C | (% by volume) | (hr) | (% by weight) | (% by weight) | (SiO₂/C) |
| Example 1 | 350 | 9 | 1.1 | 0.6 | 2.5 | 4.17 |
| * Example 9 | 350 | 9 | 1.1 | 0.4 | 2.7 | 6.75 |
| Example 10 | 350 | 9 | 1.1 | 0.5 | 2.4 | 4.80 |
| Example 11 | 350 | 9 | 1.1 | 0.7 | 2.2 | 3.14 |
| Example 12 | 350 | 9 | 1.1 | 0.85 | 1.9 | 2.24 |
| * Example 13 | 250 | 11 | 1.1 | 0.4 | 2.2 | 5.50 |
| * Example 14 | 300 | 11 | 1.1 | 0.4 | 3.0 | 7.50 |
| * Example 15 | 300 | 7 | 1.1 | 1.0 | 1.0 | 1.00 |
| Example 16 | 300 | 11 | 1.1 | 1.0 | 2.2 | 2.20 |
| Example 17 | 300 | 13 | 1.1 | 1.0 | 3.0 | 3.00 |
| Example 18 | 390 | 13 | 1.1 | 1.0 | 3.5 | 3.50 |
| Example 19 | 250 | 11 | 1.1 | 1.5 | 2.2 | 1.47 |
| Example 20 | 300 | 11 | 1.1 | 1.5 | 3.0 | 2.00 |
| Example 21 | 300 | 13 | 1.1 | 1.5 | 3.5 | 2.33 |
| Example 22 | 300 | 9 | 1.1 | 2.0 | 2.2 | 1.10 |
| Example 23 | 300 | 11 | 1.1 | 2.0 | 3.0 | 1.50 |
| Example 24 | 390 | 13 | 1.1 | 2.0 | 3.5 | 1.75 |
| * Example 25 | 300 | 11 | 1.1 | 2.2 | 2.2 | 1.00 |
| Example 26 | 390 | 13 | 1.1 | 2.2 | 3.5 | 1.59 |

| | | | | | | |
|---|---|---|---|---|---|---|
| (*) control examples, outside the scope of claim 1 | | | | | | |

After manufacturing the honeycomb fired bodies in Examples and Comparative Examples, a three-point bending strength test was carried out on 10 honeycomb fired bodies. The results are shown in Table 5.
Specifically, in light of JIS R 1601, the three-point bending strength test was carried out by using Instron 5582 at a span distance of 135 mm and a speed of 1 mm/min to measure a bending strength (MPa) of each of the honeycomb fired bodies.

Also, after manufacturing the honeycomb fired bodies in Examples and Comparative Examples, the pore diameters formed in the honeycomb fired bodies were measured by the following method. The results are shown in Table 5.
Specifically, in compliance with JIS R 1655, by using a fine-pore distribution measuring device (AUTOPORE III 9405, manufactured by Shimadzu Corp.) using a mercury injection method, 1 cm cubic portions were cut from the central portions of each of the 10 honeycomb fired bodies as samples, and the fine-pore distributions of the 10 samples were measured with the mercury injection method in a fine-pore diameter range of 0.2 to 500µm. The resulting average fine-porediameterwas calculated as (4V/A), thereby calculating the average fine-pore diameter and the standard deviation thereof.

Also, a pressure loss of the honeycomb structured bodies manufactured in Examples and Comparative Examples were measured. The results are shown in Table 5. Here, 10 samples were used.
As the pressure loss of each of the honeycomb structured bodies, the respective initial pressure loss under a flow rate of 1000 N·m³/h was measured.

**[Table 5]**

| | Average pore diameter | | Bend strength (MPa) | Honeycomb structured body pressure loss (kPa) |
|---|---|---|---|---|
| | Average value (µm) | Standard deviation (µm) | | |
| Example 1 | 11.4 | 0.30 | 33 | 8.94 |
| * Example 2 | 8.1 | 0.61 | 30 | 9.22 |
| Example 3 | 10.0 | 0.43 | 34 | 9.10 |
| Example 4 | 11.3 | 0.31 | 26 | 8.90 |
| Example 5 | 9.5 | 0.48 | 28 | 9.10 |
| Example 6 | 10.6 | 0.38 | 32 | 9.02 |
| Example 7 | 11.2 | 0.33 | 32 | 8.90 |
| Example 8 | 11.1 | 0.34 | 31 | 8.74 |
| * Example 9 | 12.0 | 0.25 | 23 | 9.02 |
| Example 10 | 10.8 | 0.38 | 32 | 9.10 |
| Example 11 | 9.9 | 0.45 | 29 | 9.14 |
| Example 12 | 8.2 | 0.50 | 26 | 9.45 |
| * Example 13 | 10.9 | 0.34 | 24 | 8.94 |
| * Example 14 | 11.7 | 0.26 | 23 | 8.86 |
| * Example 15 | 6.5 | 0.78 | 25 | 9.69 |
| Example 16 | 9.8 | 0.46 | 33 | 9.14 |
| Example 17 | 11.5 | 0.30 | 34 | 8.90 |
| Example 18 | 12.2 | 0.23 | 25 | 8.74 |
| Example 19 | 9.3 | 0.50 | 32 | 9.34 |
| Example 20 | 11.4 | 0.31 | 29 | 8.94 |
| Example 21 | 12.1 | 0.27 | 26 | 8.74 |
| Example 22 | 8.2 | 0.48 | 31 | 9.47 |
| Example 23 | 10.5 | 0.40 | 32 | 9.02 |
| Example 24 | 11.4 | 0.51 | 28 | 8.90 |
| * Example 25 | 8.2 | 0.62 | 30 | 9.81 |
| Example 26 | 11.3 | 0.52 | 28 | 8.94 |
| Comparative Example 1 | 5.7 | 0.86 | 19 | 10.13 |
| Comparative Example 2 | 12.9 | 0.16 | 17 | 8.90 |
| Comparative Example 3 | 4.5 | 0.98 | 17 | 10.32 |
| Comparative Example 4 | 13.4 | 0.10 | 15 | 8.43 |

| | | | | |
|---|---|---|---|---|
| (*) control examples, outside the scope of claim 1 | | | | |

From the results of Examples 1 to 4 and Comparative Examples 1 and 2, it can be clearly seen that the degreasing temperature used in the method for manufacturing a honeycomb structured body is desirably in the range of 250 to 390°C.

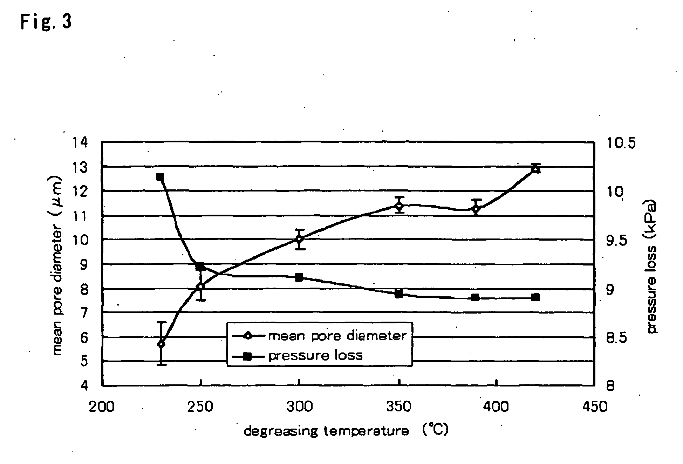

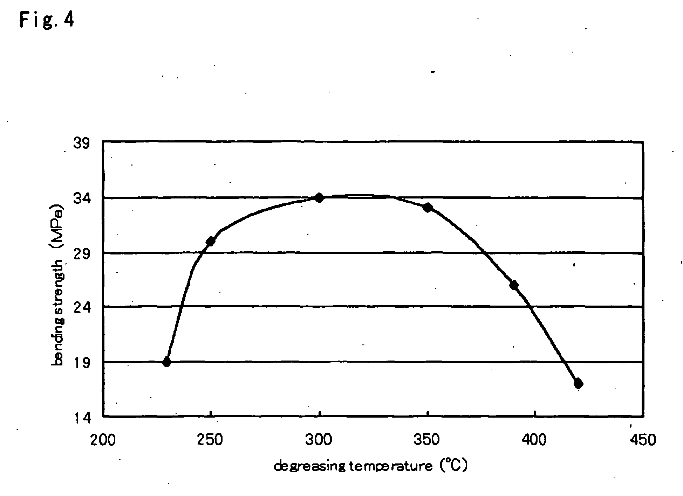

Fig. 3 is a graph illustrating the relationship between the degreasing temperature used in Examples 1 to 4 and Comparative Examples 1 and 2, and the average pore diameter and the pressure loss of the honeycomb structured bodies. Fig. 4 is a graph illustrating the relationship between the degreasing temperature used in Examples 1 to 4 and Comparative Examples 1 and 2, and the bending strength of the honeycomb fired bodies.
By setting the degreasing temperature in the range of 250 to 390°C in the method for manufacturing a honeycomb structured body, it is possible to manufacture a honeycomb structured body with a low pressure loss, and having a honeycomb fired body with a sufficient bending strength (25 MPa or more). In contrast to this, it has become clear that if the degreasing temperature is less than 250°C, large variation of pore diameter of the honeycomb structured body (honeycomb fired body) occurs, and also the bending strength thereof becomes too low (less than 20 MPa). Alternately, it has also become clear (refer to Table 5, Figs. 3 and 4) that if the degreasing temperature is more than 390°C, bending strength becomes too low (less than 20 MPa) . Also, it has become clear (refer to Table 5, Fig. 4) that by setting the degreasing temperature in the range of 250 to 350°C in particular, it is possible to manufacture a honeycomb structured body having a honeycomb fired body of a high bending strength of 30 MPa or more.

Here, with regard to the honeycomb fired body (size: 34.3 mm × 34.3 mm × 150.5 mm, cell concentration: 46.5 pcs/cm², and a cell wall thickness: 0.25 mm) manufactured according to the examples, as long as the bending strength is 23 MPa or more, its strength is presumably at a tolerable level as a product; with a bending strength of 25 MPa or more, it is presumably at a sufficient level foruseasaproduct; and withabending strength of 30 MPa or more, it is presumably an extremely high quality product.

Also, it has become clear that according to the results of Examples 5 to 8 and Comparative Examples 3 and 4 that the O₂ concentration in the atmosphere in the degreasing treatment used in the method for manufacturing a honeycomb structured body is in the range of 5 to 13% by volume.

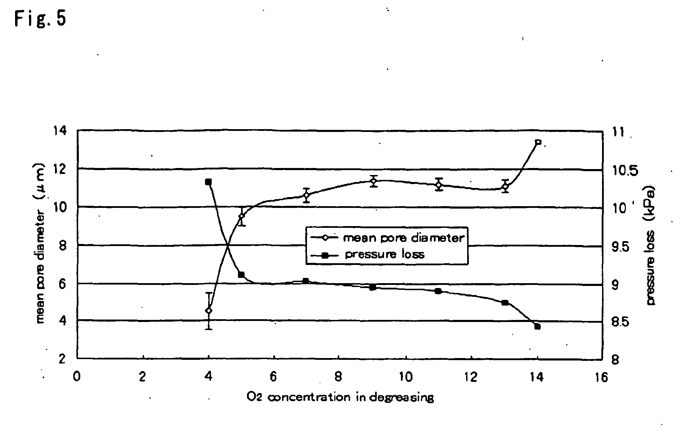

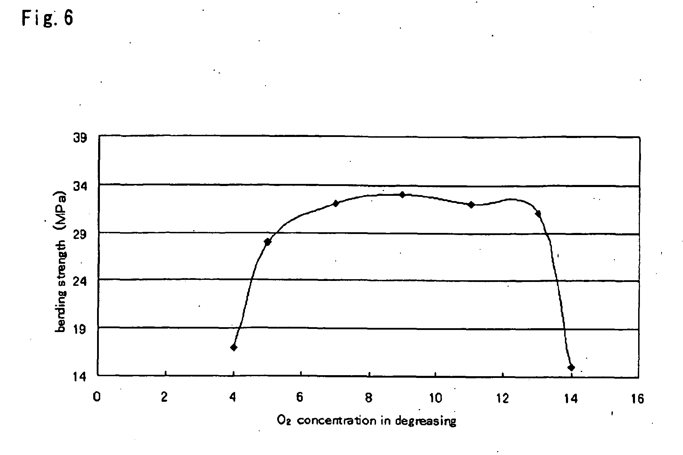

Fig. 5 is a graph illustrating the relationship between the O₂ concentration in the atmosphere in the degreasing treatment used in Examples 5 to 8 and Comparative Examples 3 and 4, and the average pore diameter and the pressure loss of the honeycomb structured bodies. Fig. 6 is a graph illustrating the relationship between the O₂ concentration in the atmosphere in the degreasing treatment used in Examples 5 to 8 and Comparative Examples 3, 4, and the bending strength of the honeycomb fired bodies.
It has also become clear that in the method for manufacturing a honeycomb structured body, by setting the O₂ concentration in the atmosphere in the degreasing treatment in the range of 5 to 13% by volume, it is possible to manufacture a honeycomb structured body comprising pores of a uniform diameter, a low pressure loss, and a honeycomb fired body having a high degree of bending strength. In contrast to this, it has become clear that with the O₂ concentration in the atmosphere of less than 5% by volume, it is unlikely to enlarge the pore diameter of the honeycomb fired body, the bending strength of the honeycomb fired body becomes too low (less than 20 MPa), and that if the O₂ concentration in the atmosphere exceeds 13% by volume, the bending strength of the honeycomb fired body becomes too low (less than 20 MPa) (refer to Table 5, Figs. 5 and 6).

Also, it has become clear in the method for manufacturing a honeycomb structured body that a content of carbon source material within the material composition is preferably in the range of 8 to 18% by weight.
The content of carbon source material within this range (refer to Examples 1, 10 to 12) makes it possible to manufacture a honeycomb structured body having a low pressure loss and a high degree of bending strength. In contrast to this, with the content of carbon source material of less than 8% by weight, there are cases in which the bending strength will be insufficient (refer to Example 9) and variation occurs in pore diameter (refer to Example 15). If the content of carbon source material exceeds 18% by weight, there tends to be a variation in the pore diameter (refer to Examples 24 and 26).

Also, it has become clear that in the method for manufacturing a honeycomb structured body, the carbon content within the honeycomb degreased body is preferably in the range of 0.5 to 2.0% by weight, the SiO₂ content within the honeycomb degreased body is preferably in the range of 1.9 to 3.4% by weight, and furthermore, the weight ratio of SiO₂ and carbon within the honeycomb degreased body is preferably more than 1.0 and 5.0 or less in the method for manufacturing a honeycomb structured body.
The carbon content and the SiO₂ content in the degreased body within the above-mentioned range makes it possible to manufacture a honeycomb structured body comprising pores of a uniform diameter, a low pressure loss, and a honeycomb fired body having a high degree of bending strength (refer to Examples 16, 17, 19, 20, 22 and 23).
Alternately, if the carbon content within the honeycomb degreased body is less than 0.5% by weight, there are cases where the bending strength of the honeycomb fired body is more likely to become low (refer to Examples 13 and 14), and if the carbon content is more than 2.0% by weight, there are cases where large variation occurs in pore diameter, and a pressure loss becomes large (refer to Examples 25 and 26).

Also, it has become clear that if the SiO₂ content within the honeycomb degreased body is less than 1.9% by weight, there are cases where large variation occurs in pore diameter and a pressure loss of the honeycomb structured body becomes large (refer to Example 15), and if the SiO₂ content within the honeycomb degreased body is more than 3.4% by weight, there are cases where pore diameter becomes large, and bending strength becomes low (refer to Examples 18 and 21).
Here, as seen in Examples 24 and 26, even if the SiO₂ content within the honeycomb degreased body exceeds 3.4% by weight, this does not necessarily mean that the strength will also become low.

Also, at a weight ratio of SiO₂ and carbon within the honeycomb degreased body of 1.0 or less, a pressure loss tends to become great, and large variation tends to occur in pore diameter (refer to Examples 15 and 25). And alternately, at weight ratio of SiO₂ and carbon within the honeycomb degreased bodyof more than 5.0, there is a trend of bending strength becoming small (refer to Examples 13 and 14).

### BRIEF DESCRIPTION OF THE DRAWINGS

Fig. 1 is a perspective view schematically illustrating one example of the honeycomb structured body.
Fig. 2(a) is a perspective view schematically illustrating the honeycomb fired body forming the honeycomb structured body illustrated in Fig. 1.
Fig. 2(b) is a cross-sectional view taken along line A-A of Fig. 2(a) .
Fig. 3 is a graph illustrating the relationship between the degreasing temperature used in Examples 1 to 4 and Comparative Examples 1 and 2, and the average pore diameter and the pressure loss of the honeycomb structured bodies.
Fig. 4 is a graph illustrating the relationship between the degreasing temperature used in Examples 1 to 4 and Comparative Examples 1 and 2, and the bending strength of the honeycomb fired bodies.
Fig. 5 is a graph illustrating the relationship between the O₂ concentration in the atmosphere in the degreasing treatment used in Examples 5 to 8 and Comparative Examples 3 and 4, and the average pore diameter and the pressure loss of the honeycomb structured bodies.
Fig. 6 is a graph illustrating the relationship between the O₂ concentration in the atmosphere in the degreasing treatment used in Examples 5 to 8 and Comparative Examples 3 and 4, and the bending strength of the honeycomb fired bodies.

### EXPLANATION OF SYMBOLS

- 100: Honeycomb structured body
- 101: Sealing material layer (Adhesive Layer)
- 102: Sealing material layer (Coat Layer)
- 103: Honeycomb block
- 110: Honeycomb fired body
- 111: Cell
- 112: Plug material
- 113: Cell wall

## Claims

1. A method for manufacturing a honeycomb structured body,
including the steps of:
preparing a material composition containing at least a silicon carbide powder and a binder;
manufacturing a pillar-shaped honeycomb molded body in which a number of cells are disposed in parallel with one another in a longitudinal direction with a cell wall therebetween by molding said material composition;
manufacturing a honeycomb degreased body by carrying out a degreasing treatment on said honeycomb molded body; and
manufacturing a honeycomb structured body comprising a honeycomb fired body by carrying out a firing treatment on said honeycomb degreased body,
wherein
said degreasing treatment is carried out at a degreasing temperature of 250 to 390°C and under O₂ concentration in the atmosphere of 5 to 13% by volume, and
the weight ratio of SiO₂ and carbon contained in said honeycomb decreased body is over 1.0 and 5.0 or less.

2. The method for manufacturing a honeycomb structured body according to claim 1,
wherein
the carbon content in said honeycomb degreased body is in the range of 0.5 to 2.0% by weight.

3. The method for manufacturing a honeycomb structured body according to claim 1 or 2,
wherein
the SiO₂ content in said honeycomb degreased body is in the range of 1.9 to 3.4% by weight.

4. The method for manufacturing a honeycomb structured body according to any of claims 1 to 3,
wherein
the content of carbon source material in said material composition is in the range of 8 to 18% by weight.

5. The method for manufacturing a honeycomb structured body according to any of claims 1 to 4,
wherein
said binder is a compound which is decomposed at 250 to 390°C.

## Patentansprüche

1. Verfahren zur Herstellung eines Körpers mit Wabenstruktur, das die folgenden Schritte einschließt:
Herstellen einer Materialzusammensetzung, die mindestens ein Siliziumcarbidpulver und ein Bindemittel enthält;
Herstellen eines säulenförmigen Formkörpers mit Wabenstruktur, in dem eine Vielzahl von Zellen parallel zueinander in Längsrichtung mit einer Zellwand dazwischen angeordnet sind, durch Formen der Materialzusammensetzung;
Herstellen eines entfetteten Körpers mit Wabenstruktur, indem eine Entfettungsbehandlung mit dem Formkörper mit Wabenstruktur durchgeführt wird und
Herstellen eines Körpers mit Wabenstruktur, umfassend einen gebrannten Körper mit Wabenstruktur, indem eine Brennbehandlung mit dem entfetteten Körper mit Wabenstruktur durchgeführt wird,
worin die Entfettungsbehandlung bei einer Entfettungstemperatur von 250 bis 390°C und einer O₂-Konzentration in der Atmosphäre von 5 bis 13 Vol.% durchgeführt wird, und
das Gewichtsverhältnis von SiO₂ zu Kohlenstoff, die in dem entfetteten Körper mit Wabenstruktur enthalten sind, mehr als 1,0 und 5,0 oder weniger beträgt.

2. Verfahren zur Herstellung eines Körpers mit Wabenstruktur gemäß Anspruch 1, worin der Kohlenstoffgehalt in dem entfetteten Körper mit Wabenstruktur im Bereich von 0,5 bis 2,0 Gew.% liegt.

3. Verfahren zur Herstellung eines Körpers mit Wabenstruktur gemäß Anspruch 1 oder 2, worin der SiO₂-Gehalt in dem entfetteten Körper mit Wabenstruktur im Bereich von 1,9 bis 3,4 Gew.% liegt.

4. Verfahren zur Herstellung eines Körpers mit Wabenstruktur gemäß mindestens einem der Ansprüche 1 bis 3, worin der Gehalt an Kohlenstoffquellmaterial in der Materialzusammensetzung im Bereich von 8 bis 18 Gew.% liegt.

5. Verfahren zur Herstellung eines Körpers mit Wabenstruktur gemäß mindestens einem der Ansprüche 1 bis 4, worin das Bindemittel eine Verbindung ist, die sich bei 250 bis 390°C zersetzt.

## Revendications

1. Procédé de fabrication d'un corps à structure en nid d'abeille, comprenant les étapes consistant à:
préparer une composition de matières contenant au moins une poudre de carbure de silicium et un liant;
fabriquer un corps en nid d'abeille moulé en forme de pilier dans lequel un nombre de cellules sont disposées en parallèle les unes aux autres dans une direction longitudinale avec une paroi de cellule entre celles-ci en moulant ladite composition de matières;
fabriquer un corps en nid d'abeille dégraissé en exécutant un traitement de dégraissage sur ledit corps en nid d'abeille moulé; et
fabriquer un corps à structure en nid d'abeille comprenant un corps en nid d'abeille cuit en exécutant un traitement de cuisson sur ledit corps en nid d'abeille dégraissé,
où
ledit traitement de dégraissage est exécuté à une température de dégraissage allant de 250 à 390°C et sous une concentration de O₂ dans l'atmosphère allant de 5 à 13% en volume, et
le rapport en poids de SiO₂ et de carbone contenus dans ledit corps en nid d'abeille dégraissé est supérieur à 1,0 et de 5,0 ou moins.

2. Procédé de fabrication d'un corps à structure en nid d'abeille selon la revendication 1,
où
la teneur en carbone dans ledit corps en nid d'abeille dégraissé se trouve dans la gamme de 0,5 à 2,0% en poids.

3. Procédé de fabrication d'un corps à structure en nid d'abeille selon la revendication 1 ou 2,
où
la teneur en SiO₂ dans ledit corps en nid d'abeille dégraissé se trouve dans la gamme de 1,9 à 3,4% en poids.

4. Procédé de fabrication d'un corps à structure en nid d'abeille, selon l'une des revendications 1 à 3,
où
la teneur en la matière source de carbone dans ladite composition de matières se trouve dans la gamme de 8 à 18% en poids.

5. Procédé de fabrication d'un corps à structure en nid d'abeille selon l'une des revendications 1 à 4,
où
ledit liant est un composé qui est décomposé à 250 à 390°C.
